# EUROPEAN PATENT APPLICATION

(11) **EP 3 415 947 A1**
(43) Date of publication of application: **19.12.2018**
(21) Application number: 17175436.9
(22) Date of filing: 12.06.2017
(51) Int. Cl.: G01S 13/88, B65F 1/00, G01F 23/284

(54) **RADAR SENSOR, CONTAINER FOR BULK MATERIAL, SUCH AS WASTE, AND METHOD FOR DETERMINING THE FILL DEGREE OF A DETECTION AREA AND MORE PREFERABLY OF A CONTAINER FOR BULK MATERIAL, SUCH AS WASTE**

(71) Applicant: Mic-O-Data B.V., 7556 BV Hengelo (NL)
(72) Inventor: Schwind, Richard, 7345 AT Wenum-Wiesel (NL); Blömer, Tim Gerald, 7522 PB Enschede (NL); Gruben, Andre, 7555 LX Hengelo (NL); Kooijman, Jord Adriaan, 7623 CA Borne (NL); Harberts, Etienne, 7231 HM Warnsveld (NL)
(74) Representative: 't Jong, Bastiaan Jacob

(57) **Abstract**

The invention relates to a radar sensor, comprising:
- transmitting means, for transmitting a sweep towards a detection area;
- receiving means, for receiving reflections of the sweep from the detection area; and
- processing means, for processing the reflections received by the receiving means
wherein the processing means calculate a fill degree from the aggregate of a plurality and preferably all of the reflections received by receiving means.

The invention further relates to a container for bulk material, such as waste, comprising a radar sensor according to the invention, mounted to the container.

The invention further relates to a method for determining the fill degree of a detection area and more preferably of a container for bulk material, such as waste.

## Description

The invention relates to a radar sensor, comprising:
- transmitting means, for transmitting a sweep towards a detection area;
- receiving means, for receiving reflections of the sweep from the detection area; and
- processing means, for processing the reflections received by the receiving means.

Containers may be used to store or collect materials, awaiting further processing. Such containers, which are often distributed in a widespread network, may for instance be used to collect or store bulk material, such as waste. Afterwards, the contents are transferred to a post-processing unit which, in the case of waste, is a waste-processing plant. In order to empty such containers, it is most often necessary to go to the container with a vehicle. In order to maximize the efficiency of such a process, it is highly desirable to provide such containers with means which are capable of measuring the fill degree of the container.

It is known to provide a sensor in the container for this purpose. The container is provided with an ultrasonic sensor. The transmitting means of the sensor periodically transmit a ultrasonic signal through container, which is reflected on the material inside the container, and then received by the receiving means. From the receipt of this signal, the fill degree of the container is calculated. The acquired fill degree data is sent to an external server and alarms are generated with the container is (almost) full.

This solution has a number of disadvantages. In the first place, the sensor is only able to give information of the fill degree based on data acquired relatively close to the sensor, which does not necessarily give an overview of the fill degree in the container as a whole. Secondly, this sensor copes with problems in detection due to absorption of the ultrasonic signal, e.g. when the material comprises moisture, dust or ice. Furthermore, the sensor only works when it is mounted with the transmitting means and receiving means inside the container, which makes the process of installation of such a sensor complex and time consuming. In addition, the sensor is found to have problems with measurement of fill degree in containers provided with a (waste) bag in the container, which may in some cases be used to ease the process of emptying the container and to increase hygiene. Such waste bags may disturb the measurement of the fill degree, also leading to false alarms, especially when the waste bag is arranged in the container in a non-spread-out manner in which the walls of the bag still touch each other, which is most often the case at relatively low fill degrees.

It is now an object of the invention to reduce or even obviate the above mentioned disadvantages.

This object is achieved with a radar sensor according to the preamble, wherein the processing means calculate a fill degree from the aggregate of a plurality and preferably all of the reflections received by receiving means.

Radar sensors according to the preamble are per se known for a wide variety of applications, e.g. in aviation, on board of a ship, overspeed controlling, by military forces, in astronautics and astronomy. In each of these applications, a signal (a sweep) is transmitted by the transmitting means of the sensor, which is partially reflected by the first object in its path in the detection area, and partially transmitted in order subsequently reflect on the next object on its path. This results in a plurality of reflections received by the receiving means which are then processed by the processing means in order to calculate a desired parameter.

In each of this applications, there is only a detection based on the signal received by the receiving means with the highest intensity, i.e. the signal closest to the receiving means, whereas the other reflections are neglected (not taken into account). However, in the radar sensor according to the invention the fill degree is calculated from an aggregate of a plurality and preferably all of the reflections received by the receiving means, also taking into account reflections relatively distant from the receiving means, thereby giving a more detailed overview of the fill degree in the detection area as a whole.

Radar sweeps have the ability to travel through a wide variety of materials, e.g. wood, polymers and composites. This provides the possibility of measuring hidden or covered parts in the detection area, providing a higher reliability of measurement. The detection of reflective materials in a detection area is also improved in comparison to other types of sensors.

In addition, the resolution of measurement of the distance (or speed) between the material in the detection area and the receiving means is increased, and the measurement is less prone to errors due to moist or dust particles, especially when using frequency-modulated continuous wave signals.

The receiving means is preferably provided with a lens adapted to the size of the detection area. In detection areas with a large size (e.g. a 1.100 liter volume), this lens will typically be a wide-angle lens, whereas a narrow-angle lens is preferred for relatively small detection areas, such as typical waste baskets.

In a first preferred embodiment of the radar sensor according to the invention, the processing means calculate the fill degree from the direction from and time of receipt of the reflections.

It has been found that sensors equipped with processing means which calculate the fill degree from the direction from, and thus the origin from, and time of receipt of the reflections, are able to acquire a fill degree which gives a good overview of the fill degree in the detection area as a whole in particular. In order to determine the direction, the radar sensor necessarily comprises more than one receiving means.

In a second preferred embodiment of the radar sensor according to the invention, the receiving means are arranged hidden for sweeps directly originating from the transmitting means.

This makes it impossible for radar sweeps from the transmitting means to travel directly to the receiving means without having had a reflection on the material in the detection area, thereby increasing the reliability of measurement even further.

In a third preferred embodiment of the radar sensor according to the invention, the radar sensor comprises communication means, for connecting to an external server.

The provision of communication means provides the opportunity for the sensor to send the fill degree and/or alarms based on this fill degree to an external server in order to alert third parties to attend the detection area, e.g. via wireless networks (e.g. cellular data networks, wifi, short message service, general packet radio service, et cetera) or wired networks. Alarms may be issued when the detection area is (almost) full, i.e. when the fill degree is above a threshold value, especially when the detection area is a waste container. Alarms may be used when the detection area is (almost) empty, i.e. when the fill degree is below another threshold value, especially when the detection area is used for the storage of e.g. chemicals, mortar or fodder). In both cases, this is a signal of an (imminent) situation of malfunction of the detection area, requiring attention. It is preferred if the alarm is already sent before the container is has reached its threshold value, in order for the detection area to remain operational for a certain period of time.

The invention further relates to a container for bulk material, such as waste, comprising a radar sensor according to the invention, mounted to the container.

The radar sensor according to the invention may be mounted in a waste container, which may be either a relatively small and oblong containers often located in public space, which in most cases have a freely accessible inlet for the collection of small quantities of waste which are generated while a person is on the move, as well as containers, whether subterraneous or not, whether provided with wheels for transport of the container or not, used for the collection of household waste, which are larger in size, and in more and more cases, are provided with an access control system in the inlet, requiring a person using the container to provide an access card before the inlet is made accessible. The waste will in most cases drop or flow from the inlet downward towards the end wall. The inlet may be provided with a cover.

In addition to containers for waste storage, the radar sensor is however also applicable in containers for storage of a wide variety of other types bulk materials, e.g. in silos (e.g. for storage of fodder), in storage of chemicals (e.g. aggressive chemicals or mortar).

The radar sensor may be mounted to the container in a variety of ways. Since the radar sweeps are able to travel through most materials, it is possible to fix at least one of the transmitting means and/or the receiving means to the exterior of the container, in order to ease the installation. However, in order to hide and secure the radar sensor, it may be preferred to mount at least one of the the transmitting means and/or receiving means inside the container. The position of the transmitting means and/or receiving means in the container, which will have an inlet and an end wall, in which direction the material will go when put in the container through the inlet, will be either close to the inlet, directed towards the end wall, but instead or additionally may also be near the end wall, directed towards the inlet. The latter position provides the possibility to detect blockages or jams inside the container, when the fill degree is low near the end wall of the container compared to the fill degree proximate to the inlet. In particular for containers used for storage of chemicals, it is preferred to arrange the sensor to the exterior or outer wall of the container in order to separate the location of the sensor from the contents of the container. In particular for container for container used for storage of waste, an arrangement of the sensor which is at least i.a. near or at the end wall, directed towards the inlet is beneficial since blockages or jams is a problem which may frequently occur in the storage of waste.

The transmitting means and the receiving means will be typically arranged in a standard plastic watertight housing, made of a radio transparent material.

In a first preferred embodiment of the container according to the invention, the container comprises a bottom with an upright circumferential inner wall, and the container further comprises a bag arranged in the container with the edge extending along the inner wall and adjacent to the top of the container.

The provision of a bag inside the container of which the edge extends along the inner wall of the container adjacent to the top of the container increases hygiene and ease of transfer of the material disposed in the container.

In a second preferred embodiment of the container according to the invention, the sensor is arranged between the outer side of the bag and the inner wall.

Detection signals from prior art sensors are not adequately able to travel through plastic materials in contrast to the radar sensor according to the invention. This provides much more flexibility in the selection of the location of the sensor which may for instance be easily placed outside of the bag, since the radar sweeps will be able to travel through the bag wall to detect the fill degree in the bag.

The invention further relates to a method for determining the fill degree of a detection area and more preferably of a container for bulk material, such as waste, comprising the steps of:
- providing a radar sensor according to the invention or a container according to the invention;
- transmitting a sweep towards a detection area with the transmitting means;
- receiving reflections of the sweep from the detection area by the receiving means; and
- processing the reflections, which are received by the receiving means, by the processing means
wherein the step of processing the reflections, which are received by the receiving means, by the processing means comprises the step of calculating a fill degree from the aggregate of a plurality and preferably all of the reflections received by receiving means.

In a first preferred embodiment of the method according to the invention, the sweep is transmitted at at least one but preferably a plurality of frequencies, preferably selected from the range between 57 GHz and 64 GHz.

It is found that the selection of the frequency within this range is especially suitable for distance determinations, and is therefore preferred in the invention.

These and other features will be further elucidated with reference to the accompanying figures.
Figure 1 shows a relatively small container according to the invention.
Figure 2 shows a relatively large container according to the invention.

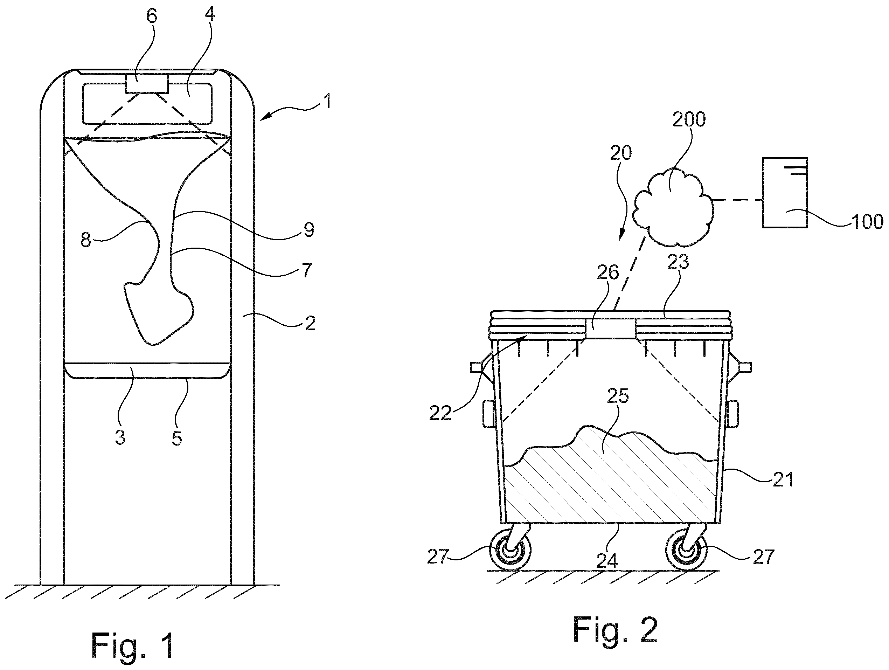

Figure 1 shows a 175 liter container 1 used for the collection of waste from people who are on the way. The container 1 comprises a U-shaped frame 2, with attached to it a housing 3 with an inlet 4 and an end wall 5. The container 1 is provided with a sensor 6 for detecting the fill degree inside housing 3. Housing 3 is provided with a bag 7, shown empty, in which the bag is not spread-out, i.e. opposing bag walls 8, 9 are still relatively close to each other. Sensor 6 transmits a signal from sensor 6 towards end wall 5, which is reflected by the material in the housing 3, and then is directed towards inlet 4 or sensor 6.

In a modification of the container 1 according to figure 1, a sensor such as sensor 6 may alternatively or additionally be fixed inside the container to the end wall 5, in order to detect blockages inside the container 1.

Figure 2 shows a 1.100 liter container 20 with a container housing 21, provided with an inlet 22, covered by a lid 23, hingeable arranged along the inlet 22. The housing 21 is further provided with an end wall 24 and is filled with material 25, of which the level is detectable by sensor 26. The container 20 is provided with four wheels 27 (of which two are shown) for transport of the container 20. Sensor 26 transmits a signal from sensor 26 towards end wall 24, which is reflected by the material 25 in the housing 21, and then is directed towards inlet 22 or sensor 26.

Sensor 26 is provided with connecting means for sending the calculated fill degree and/or an alarm to an external server 100 through network 200 when the container 20 is (almost) completely filled.

## Claims

1. Radar sensor, comprising:
- transmitting means, for transmitting a sweep towards a detection area;
- receiving means, for receiving reflections of the sweep from the detection area; and
- processing means, for processing the reflections received by the receiving means
**characterized in that**
the processing means calculate a fill degree from the aggregate of a plurality and preferably all of the reflections received by receiving means.

2. Radar sensor according to claim 1, wherein the processing means calculate the fill degree from the direction from and time of receipt of the reflections.

3. Radar sensor according to claim 1 or 2, wherein the receiving means are arranged hidden for sweeps directly originating from the transmitting means.

4. Radar sensor according to claim 1, 2 or 3, wherein the radar sensor comprises communication means, for connecting to an external server.

5. Container for bulk material, such as waste **characterized by**
a radar sensor according to any of the preceding claims, mounted to the container.

6. Container according to claim 5, wherein the container comprises a bottom with an upright circumferential inner wall, and wherein the container further comprises a bag arranged in the container with the edge extending along the inner wall and adjacent to the top of the container.

7. Container according to claim 6, wherein the sensor is arranged between the outer side of the bag and the inner wall.

8. Method for determining the fill degree of a detection area and more preferably of a container for bulk material, such as waste, comprising the steps of:
- providing a radar sensor according to any of the claims 1 to 4 or a container according to any of the claims 5 to 7;
- transmitting a sweep towards a detection area with the transmitting means;
- receiving reflections of the sweep from the detection area by the receiving means; and
- processing the reflections, which are received by the receiving means, by the processing means
wherein the step of processing the reflections, which are received by the receiving means, by the processing means comprises the step of calculating a fill degree from the aggregate of a plurality and preferably all of the reflections received by receiving means.

9. Method according to claim 8, wherein the sweep is transmitted at at least one but preferably a plurality of frequencies, preferably selected from the range between 57 GHz and 64 GHz.
